# EUROPEAN PATENT APPLICATION

(11) **EP 4 617 761 A1**
(43) Date of publication of application: **17.09.2025**
(21) Application number: 25162743.6
(22) Date of filing: 10.03.2025
(51) Int. Cl.: G02B 23/24, G01M 15/14

(54) **OPTICAL INSPECTION SYSTEM AUTOMATICALLY DEPLOYED ROVER**

(30) Priority: 08.03.2024 US 202418600383
(71) Applicant: RTX Corporation, Farmington, CT 06032 (US)
(72) Inventor: WARREN, Eli, Bend, 97703-8475 (US); GOYETTE, Scott, Moosup, 06354 (US)
(74) Representative: Dehns

(57) **Abstract**

An engine inspection apparatus includes a remotely controlled inspection rover (110), a rover deployment cart (130), and a stabilization tether (150) having a first end attached to the inspection rover (110) and a second end attached to the rover deployment cart (130). The stabilization tether (150) is configured to prevent at least one of ingestion of the inspection rover (110) by an engine (402) while the engine (402) is operating and expulsion of the inspection rover (110) by the engine (402) while the engine (402) is operating.

## Description

### TECHNICAL FIELD

This disclosure relates generally to engine inspection methods and apparatuses. More specifically, this disclosure relates to an optical inspection system automatically deployed rover.

### BACKGROUND

The fan blades in a fan rotor stage of a gas turbine engine can be subject to damage caused by a variety of different factors. For example, foreign and/or domestic objects can strike a fan blade causing Foreign Object Damage (FOD) and Domestic Object Damage (DOD), surface erosion can occur, or vibratory response can produce high cycle fatigue that can lead to damage. Such damage may be randomly located (FOD / DOD) or it may be statistically more likely located in certain regions. For example, along the leading edge of a fan blade, and more specifically at certain regions of a fan blade leading edge. Current practices for inspecting fan blades involve a manual inspection of each fan blade by a technician when the turbine engine is shut down and cooled down. Inspections of this type are time intensive, costly, and require skilled technicians. There is also an elevated risk of FOD/DOD from the inspection itself from inspectors leaving behind objects that get ingested into the engine during the next engine start. More efficient and less costly processes that can be used to inspect fan blades are desirable.

### SUMMARY

This disclosure provides methods and apparatus for an optical inspection system automatically deployed rover.

In an aspect of the present invention, an engine inspection apparatus is provided. The engine inspection apparatus includes a remotely controlled inspection rover, a rover deployment cart, and a stabilization tether having a first end attached to the inspection rover and a second end attached to the rover deployment cart.

In an embodiment of the above, the stabilization tether is configured to prevent at least one of ingestion of the inspection rover by an engine while the engine is operating and expulsion of the inspection rover by the engine while the engine is operating.

In a further embodiment of any of the above, the stabilization tether may include at least one of a power link configured to provide power to the inspection rover, a data reception link configured to receive control commands for operating the inspection rover, a data transmission link configured to transmit inspection data from the inspection rover, a coolant send line configured to provide a cooling medium to the inspection rover, a coolant return line configured to receive a cooling medium from the inspection rover, and a purge supply line configured to introduce a purging medium into an engine.

In a further embodiment of any of the above, the inspection rover may include a frame, a locomotion system disposed on the frame, a stabilization locking mechanism configured to lock the frame on to a component of an engine, and at least one inspection sensor extending from the frame.

In a further embodiment of any of the above, the at least one inspection sensor may be a high-speed camera, an acoustical sensor, and/or a LIDAR.

In a further embodiment of any of the above, an inspection sensor positioning arm may be disposed between the at least one inspection sensor and the frame to position the at least one inspection sensor for performing an inspection operation.

In a further embodiment of any of the above, the rover deployment cart may include a base, a locomotion system disposed on the base, and a rover deployment platform extending from the base. The rover deployment platform is configured to deploy the inspection rover into an engine housing while the engine is operating.

In another aspect of the present invention, a remotely controlled inspection rover is provided. The inspection rover includes a frame, a locomotion system disposed on the frame, a high-speed camera extending from the frame, and a stabilization tether having a first end attached to the inspection rover and a second end configured to be attached to a support apparatus.

In an embodiment of the above, the support apparatus may be a rover deployment cart configured to deploy the inspection rover into an engine housing while the engine is operating.

In a further embodiment of any of the above, the inspection rover may further include a stabilization locking mechanism configured to lock the frame on to a component of an engine, and an inspection sensor positioning arm arranged between the high-speed camera and the frame configured to position the high-speed camera while performing an inspection operation.

In yet another aspect of the present invention, a method of operating an engine inspection apparatus is provided. The method includes deploying a remotely controlled inspection rover from a rover deployment cart into an engine housing while the engine is operating, maintaining force on a stabilization tether disposed between the inspection rover and the rover deployment cart while the inspection rover is deployed in the engine housing, and performing an inspection operation with the inspection rover on a component of the engine, via an inspection sensor, while the engine is operating.

In an embodiment of the above, inspecting the component of the engine may include at least one of performing high speed photography of the component while the component is in motion, performing an acoustical analysis of the component while the component is in motion, and performing a LIDAR analysis of the component while the component is in motion.

In a further embodiment of any of the above, the component may include a plurality of fan blades.

In a further embodiment of any of the above, if the inspection rover is deployed into an inlet of the engine housing, maintaining force on the stabilization tether prevents the engine from ingesting the inspection rover.

In a further embodiment of any of the above, if the inspection rover is deployed into an exhaust of the engine housing, maintaining force on the stabilization tether prevents the engine from expelling the inspection rover.

In a further embodiment of any of the above, the temperature of the inspection rover may be regulated by a cooling medium. The cooling medium may be transported by the stabilization tether.

In a further embodiment of any of the above, the inspection rover may be locked to a component comprised by the engine prior to performing the inspection operation.

In a further embodiment of any of the above, the inspection sensor may be positioned by an inspection sensor positioning arm prior to performing the inspection operation.

In a further embodiment of any of the above, the inspection rover may be remotely controlled by receiving operation commands via the stabilization tether.

In a further embodiment of any of the above, the inspection rover may transmit inspection data related to the inspection operation. The inspection data may be transmitted via the stabilization tether.

Other technical features may be readily apparent to one skilled in the art from the following figures, descriptions, and claims.

### BRIEF DESCRIPTION OF THE DRAWINGS

For a more complete understanding of this disclosure and its advantages, reference is now made to the following description, taken in conjunction with the accompanying drawings, in which:
FIGURE 1 illustrates a block diagram for an example engine inspection apparatus according to embodiments of the present disclosure;
FIGURE 2 illustrates an example inspection rover according to embodiments of the present disclosure;
FIGURE 3 illustrates an example of an engine inspection apparatus in use according to embodiments of the present disclosure;
FIGURE 4 is a view of an example turbine engine according to embodiments of the present disclosure; and
FIGURE 5 illustrates a method of operating an engine inspection apparatus according to embodiments of the present disclosure.

### DETAILED DESCRIPTION

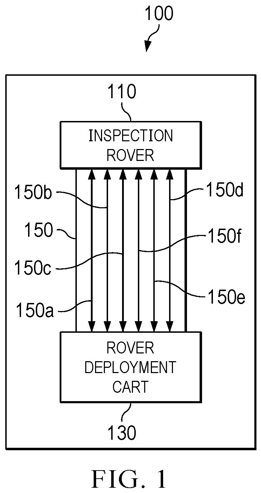

FIGURES 1 through 5, discussed below, and the various embodiments used to describe the principles of this disclosure in this patent document are by way of illustration only and should not be construed in any way to limit the scope of the disclosure. Those skilled in the art will understand that the principles of this disclosure may be implemented for any suitably arranged engine inspection apparatus.

One potential solution that can be used to inspect fan blades is an Optical Inspection System (OIS), which may be deployed while the engine is operating, and a processing system to determine if any appreciable Foreign Object Damage (FOD) is present. The determination may lead to a pass/fail decision and potentially initiate a manual inspection of the fan blades. In one embodiment, the OIS sends image data from a camera, for example, to the Full Authority Digital Engine Control (FADEC) for processing/storage and the image data can be offloaded for review for disposition on required maintenance and inspection.

In one embodiment of an OIS, an engine-embedded camera is deployed for image capture and stowed during normal operation. However, this embodiment has many challenges. One is the need for very low rotational speeds during image capture due to the lower Frames Per Second (FPS) capability of the small camera needed for engine case integration. Another is the overall integration with the engine itself, e.g., controls, cooling/purge, data processing/storage, etc. Also, if the OIS is integrated with the engine, it must survive all operating conditions even if the OIS is only in-use when aircraft is on the ground. With future programs there might be a need to replace manual inspections, referred to as "duct dives" altogether due to smaller inlets. Even with the signal from engine-embedded OIS requiring a duct dive, if a person doesn't fit, only a borescope inspection ability is available.

One alternative to a case-integrated OIS is a fully detached remotely controlled (RC) rover that can be deployed into an inlet of an engine housing of, for example an aircraft, while the aircraft is on the ground. In one embodiment, the rover is configured to fit within a variety of inlet and exhaust duct sizes and shapes. In one embodiment, the rover is configured to carry at least one inspection sensor. The inspection sensor may be, for example, a very capable high-speed camera. While the cost of a rover may be more than an integrated camera, overall cost for a fleet of engines may be lower, as fewer cameras may be required. For example, a single rover may be used to inspect multiple engines. Furthermore, the rover may be configured to inspect multiple types of engines, bringing further economy to an engine fleet.

Because the rover is completely detached from the engine, all data processing/storage, purge/cooling, etc., can be handled without additional per unit cost to the aircraft/engine. In one embodiment the rover is manually deployed by a maintainer. In another embodiment, a fully-automatic deployment of the rover is commanded by the FADEC. Such embodiments provide numerous other advantages. For example, no engine-mounted sensors/interfaces are needed for the OIS capability. Multiple fields of view may be possible, as the rover may be configured to carry multiple cameras and/or lights, be configured to reposition the camera(s), etc. In one embodiment, the rover is configured without a FADEC interface or any other engine control.

Additionally, as the rover can perform the inspection without a human duct dive, the inspection may be performed while the engine is operating, while the engine is at high temperature, etc. This enables faster inspection turnaround, as the engine may be inspected, for example, as soon as an aircraft lands, without shutting down the engine.

While the rover is described herein as being remotely controlled, in some embodiments the remote control may be manual remote control. For example, a technician may control the rover via a human interface such as a joystick, a touchscreen, etc. In other embodiments, the remote control may be fully autonomous. For example, the rover may be controlled by an artificial intelligence system, a previously programmed automation system, etc. In some embodiments, the control may be a hybrid between manual control and autonomous control.

FIGURE 1 illustrates a block diagram for an example engine inspection apparatus 100 according to embodiments of the present disclosure. The embodiment of engine inspection apparatus 100 illustrated in FIGURE 1 is for illustration only. Different embodiments of engine inspection apparatus 100 could be used without departing from the scope of this disclosure.

In the example of FIGURE 1, engine inspection apparatus 100 includes an inspection rover 110 and a rover deployment cart 130. Rover deployment cart 130 is joined to inspection rover 110 by a stabilization tether 150. In circumstances where inspection rover 110 is deployed into an engine housing while the engine is operating, applying a force to stabilization tether 150 helps avoid FOD to the engine by inspection rover 110 while inspection rover 110 is deployed. For example, when inspection rover 110 is deployed into an inlet, tension may be maintained on stabilization tether 150 between inspection rover 110 and rover deployment cart 130 to prevent inspection rover 110 from being ingested into the engine. In another example, when inspection rover 110 is deployed into an exhaust, a stiffening force may be maintained on stabilization tether 150 between inspection rover 110 and rover deployment cart 130 to prevent inspection rover 110 from being expelled from the exhaust.

While stabilization tether 150 is primarily used to prevent FOD and stabilize the position of inspection rover 110 within an engine housing while the engine is operating, in some embodiments stabilization tether may provide additional support capabilities for inspection rover 110 and/or rover deployment cart 130. For example, FIG. 1 illustrates that stabilization tether 150 comprises support links 150a-150f. However, it should be understood that in some embodiments, any number of support links 150a-150f may be omitted, and that any number of additional support links may be included in other embodiments.

Support links 150a-150f may be representative of any of a number of support functions. Examples of support functions that may be provided by one of support links 150a-150f include, but are not limited to:
providing electrical power to inspection rover 110
providing control communication to inspection rover 110
providing data communications to and from inspection rover 110
circulating a temperature regulating medium for inspection rover 110
supplying purge air to an engine under inspection

For example, support link 150a may be power supply path (e.g., positive voltage) for providing power to inspection rover 110, and support link 150b may be a power return path (e.g., ground) for completing the power supply circuit for inspection rover 110. In another example, support link 150c may be a coolant send line for providing a cooling medium to inspection rover 110 to assist in maintaining inspection rover 110's temperature. Similarly, support link 150d may be a coolant return line for transporting the cooling medium away from inspection rover 110. For instance, the cooling medium may be a liquid coolant, and support links 150c and 150d may form a closed coolant loop between inspection rover 110 and an external radiator and coolant pump system. In another example, the coolant medium may be chilled air, and support links 150c and 150d may form an open loop with inspection rover 110 where chilled air is blown into support link 150c and exhausted through 150d to a point external from the engine housing. In other example, support link 150e may provide control commands to inspection rover 110 so that inspection rover 110 maneuvers within the engine housing, performs various inspection operations, etc. In yet another example, support link 150f may provide a data path for inspection rover 110 to transmit inspection data. For example, inspection rover 110 may use support link 150f to transmit high-speed camera images that may be stored, processed, etc. by rover deployment cart 130 or some other external system. Because stabilization tether 150 may provide these support functions to inspection rover 110, inspection rover 110 has few limitations with regards to electrical power, purge-supply, cooling capacity, data rate, etc.

While FIGURE 1 illustrates engine inspection apparatus 100 as including a single inspection rover 110 and a single stabilization tether 150, it should be understood that in some embodiments engine inspection apparatus 100 may include multiple inspection rovers 110 and/or multiple stabilization tethers 150. In some embodiments, inspection apparatus 100 may include multiple rover deployment carts 130.

While FIGURE 1 illustrates engine inspection apparatus 100 as including inspection rover 110, rover deployment cart 130, and stabilization tether 150, it should be understood that some embodiments may omit at least one of rover deployment cart 130 and/or stabilization tether 150. For example, in some embodiments, inspection rover 110 may be an entirely self-contained system. In a self-contained system, rover 110 may include on-board data processing and storage, as well as wireless data communication capabilities. In other embodiments, inspection rover 110 may be deployed by rover deployment cart 130 without a stabilization tether (e.g., while the engine is shut down). In such embodiments, inspection rover 110 may be designed with a particular aerodynamic shape (e.g., an airfoil) to help avoid ingestion if deployed while the engine is in operation. In some embodiments, inspection rover 110 may be deployed manually, and stabilization tether 150 may be attached to an apparatus other than rover deployment cart 130. For example, a technician may place inspection rover 110 within the engine inlet, and stabilization tether 150 bay be attached to a fixed point (e.g., a pole), a non-mobile support apparatus, etc.

Although FIGURE 1 illustrates one example of a block diagram for an example engine inspection apparatus 100, various changes may be made to FIGURE 1. For example, the number of support links may change, the rover deployment cart could support multiple rovers, etc.

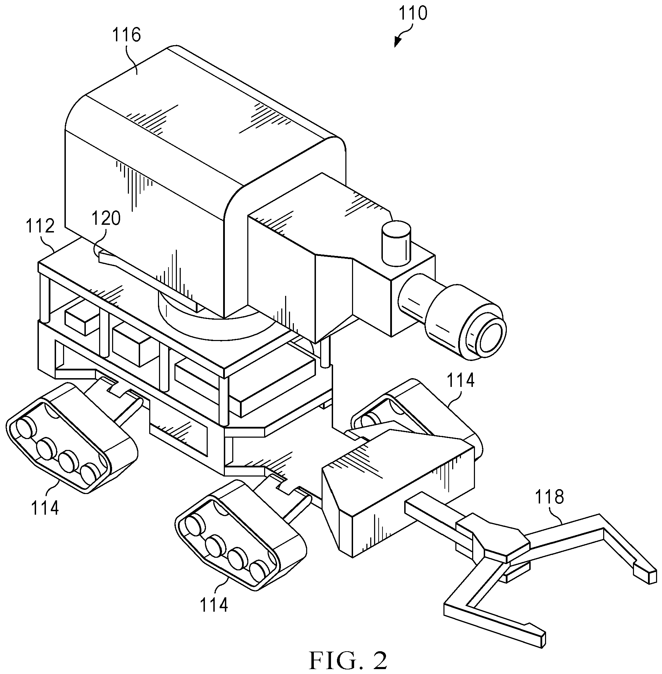

FIGURE 2 illustrates an example inspection rover 110 according to embodiments of the present disclosure. The embodiment of inspection rover 110 illustrated in FIGURE 2 is for illustration only. Different embodiments of inspection rover 110 could be used without departing from the scope of this disclosure.

In the example of FIGURE 2, inspection rover 110 includes a frame 112. Frame 112 provides mechanical support for inspection rover 110. For example, in some embodiments, stabilization tether 150 may attach to frame 112 to prevent ingestion or expulsion of inspection rover 110 from an engine housing. A locomotion system 114 is disposed on frame 112. Locomotion system 114 enables inspection rover 110 to position itself within a particular area of an engine housing. For example, locomotion system 114 may enable inspection rover 110 to drive within an intake to a particular location within the engine housing, so that a particular engine component may be inspected (e.g., a fan blade). Because inspection rover 110 may be controlled remotely, locomotion system 114 may be utilized to position inspection rover 110 without the need for a human duct dive within the engine housing. While locomotion system 114 is illustrated as a plurality of motorized tank treads, it should be understood that any locomotion system may be utilized. For example, locomotion system 114 may be implemented as motor driven wheels, an aerodynamic drive (e.g., a fan, propeller, etc.), walking legs, etc., according to particular needs. In some embodiments, locomotion system 114 may be omitted. For example, inlet flow from an operating engine under inspection may be used to draw inspection rover 110 within the engine housing of the engine under inspection.

In the example of FIGURE 2, inspection rover 110 further includes an inspection sensor 116 extending from frame 112. Inspection sensor 116 is utilized to inspect engine components. For example, inspection sensor 116 may be utilized to inspect fan blades on a turbine engine within an engine housing of an aircraft while the engine is operating. For example, inspection sensor 116 may be a high-speed camera. However, inspection sensor 116 may be any type of sensor suitable for inspecting a particular component. For example, inspection sensor 116 could be an acoustical sensor, such as an ultrasonic sensor or a microphone for ping testing, a LIDAR imaging system, a borescope arm enabling Rotor 1 Trailing Edge (R1TE) and beyond images, a magnetic sensor, etc. In some embodiments, inspection sensor 116 is modular and may be interchanged with other inspection sensors. While FIGURE 2 only depicts a single inspection sensor 116, it should be understood that inspection rover 110 may be configured to employ multiple inspection sensors 116 simultaneously. For example, inspection rover 110 may be configured with multiple sensors of different types, so that multiple modes of inspection may be performed simultaneously or within a single deployment. In another example, inspection rover 110 may be configured with multiple sensors (e.g., cameras) of the same type, so that inspection may be performed at different angles, etc., simultaneously (e.g., capturing images from different camera views without repositioning the camera or the rover).

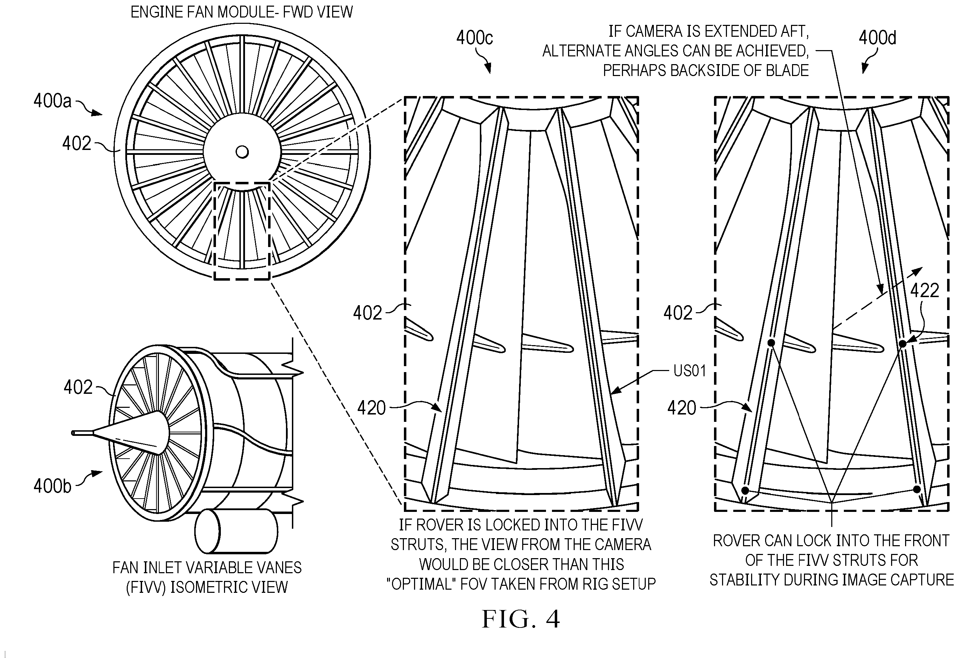

In the example of FIGURE 2, inspection rover 110 further includes an accessory 118. Accessory 118 may provide any functionality that can assist the rover during deployment. For example, accessory 118 may be a stabilization locking mechanism. In this example, a stabilization locking mechanism refers to an apparatus that locks inspection rover 110 to e.g., an engine component, to stabilize and/or secure inspection rover 110 while performing an inspection operation. For example, accessory 118 could lock inspection rover 110 to either one or both of fan inlet variable vanes (FIVVs) 420 and 422 illustrated in FIGURE 4. While FIGURE 2 depicts a single accessory 118, it should be understood that inspection rover 110 may be configured with any number of accessories 118, or accessory 118 may be omitted. In some embodiments, accessory 118 is modular and may be interchanged with other accessories. For example, in addition to being a stabilization locking mechanism, accessory 118 may be any of an additional inspection sensor, a repair tool such as a blending apparatus, a nozzle which may apply coatings such as radar mitigation, anti-icing, etc. In embodiments that employ a nozzle, the nozzle may be fed via stabilization tether 150 via a support link such as one of support links 150a-150f.

In the example of FIGURE 2, inspection rover 110 further includes an inspection sensor positioning arm 120. Positioning arm may be used to position inspection sensor 116 without repositioning inspection rover 110. For example, a particular component may be located at a position that cannot be easily viewed when inspection rover 110 is located at a particular location within an engine housing. Positioning arm 120 for example may provide pan, tilt, elevation, etc. capability for inspection sensor 116. However, it should be understood that in some embodiments, positioning arm 120 may be omitted. In such embodiments, inspection sensor 116 may be disposed directly on frame 112, and position sensor 116 may be repositioned by repositioning of inspection rover 110.

Although FIGURE 2 illustrates one example of an example inspection rover 110, various changes may be made to FIGURE 2. For example, the number of inspection sensors may change, the number of accessories may change, a different type of locomotion system could be used, etc.

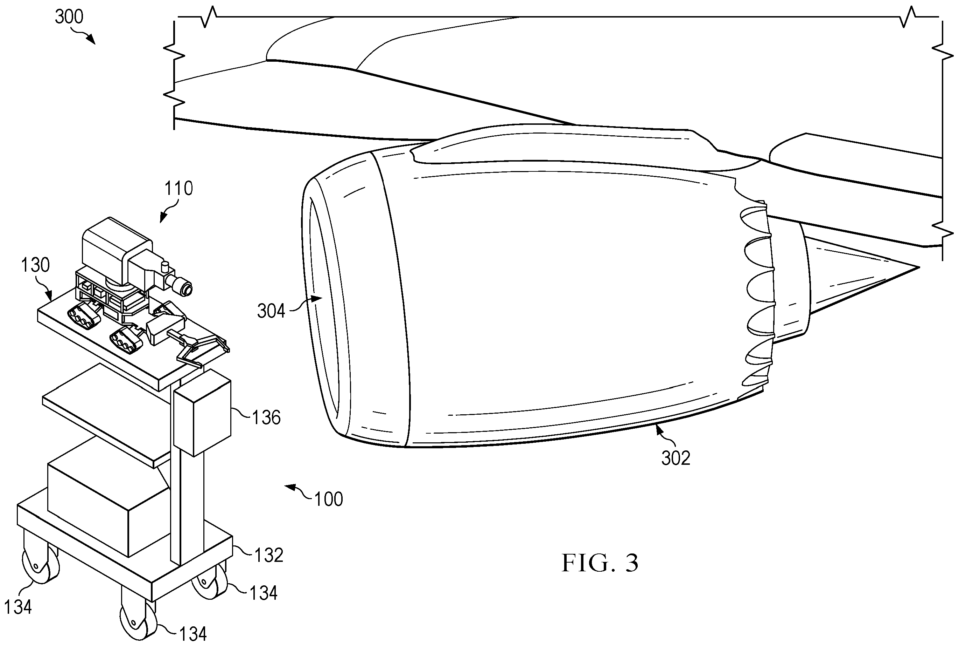

FIGURE 3 illustrates an example 300 of engine inspection apparatus 100 in use according to embodiments of the present disclosure. The embodiment of engine inspection apparatus 100 illustrated in FIGURE 3 is for illustration only. Different embodiments of engine inspection apparatus 100 could be used without departing from the scope of this disclosure.

In the example of FIGURE 3, engine inspection apparatus 100 is shown configured with inspection rover 110 and rover deployment cart 130. While FIGURE 3 does not depict stabilization tether 150, it should be understood that in the example of FIGURE 3, inspection apparatus 100 may be configured with stabilization tether 150. In the example of FIGURE 3, rover deployment cart 130 is deploying inspection rover 110 into an inlet 304 of an aircraft 302. For example, aircraft 302 may comprise an engine 402 which is illustrated in FIGURE 4.

To assist in deploying inspection rover 110, rover deployment cart 130 includes a base 132, a locomotion system 134 disposed on base 132, and a rover deployment platform 136 extending from base 132. Rover deployment platform 136 is configured to deploy inspection rover 110 into an engine housing while the engine is operating. For example, rover deployment platform 136 may raise or lower inspection rover 110 such that inspection rover 110 may drive into inlet 304 of aircraft 302. Rover deployment cart 130 may further support rover 110 by suppling power, data storage, data analysis, etc. via stabilization tether 150, providing an anchoring point for stabilization tether 150, etc. Locomotion system 134 enables deployment cart 130 to position itself to deploy inspection rover 110. For example, deployment cart 130 could be positioned via remote control manually by a technician, be positioned automatically via an artificial intelligence system, be positioned by a preprogrammed automation system, etc. While locomotion system 134 is illustrated as a plurality of motorized wheels, it should be understood that any locomotion system may be utilized. For example, locomotion system 114 may be implemented as motor driven treads, walking legs, an air lift, etc., according to particular needs.

Although FIGURE 3 illustrates one example 300 of engine inspection apparatus 100 in use, various changes may be made to FIGURE 3. For example, the rover deployment cart could support multiple rovers, an inlet for a different type of apparatus than an aircraft (e.g., a generator) could be shown, etc.

FIGURE 4 illustrates views 400a-400d of an example turbine engine 402 according to embodiments of the present disclosure. The embodiment of engine 402 illustrated in FIGURE 4 is for illustration only. Different embodiments of an engine 402 could be used without departing from the scope of this disclosure.

In the example of FIGURE 4, views 400a-400d depict turbine engine 402. View 400a is a forward looking aft view of turbine engine 402. View 400b is an isometric view of turbine engine 402. Views 400c and 400d are illustrative of a standard field of view of inspection sensor 116 while engine inspection apparatus 100 is performing an inspection of turbine engine 402. In some embodiments, inspection apparatus 100 may be calibrated based on a particular field of view, such as one of views 400c and/or 400d, etc. Turbine engine 402 includes fan inlet variable vane (FIVV) struts 420 and 422. Turbine engine 402 may be installed in an engine housing of a different apparatus, such as aircraft 302, a generator, a ship, etc. During an inspection, a remotely controlled inspection rover, such as inspection rover 110 may use an accessory such as a stabilization locking mechanism to lock itself to engine 402. For example, inspection rover 110 may utilize accessory 118 to lock itself to one or both of FIVV struts 420 and 422 and/or another component. In this manner, inspection rover 110 may perform inspection operations while engine 402 is operating. For example, locking on to engine 402 may assist in preventing FOD to engine 402 from inspection rover 110, help prevent ingestion of inspection rover 110, may stabilize the position of inspection rover 110 while performing inspection operations, etc.

Although FIGURE 4 illustrates one example of a turbine engine 402 in use, various changes may be made to 4. For example, engine 402 could be a different type of engine, could include different components, etc.

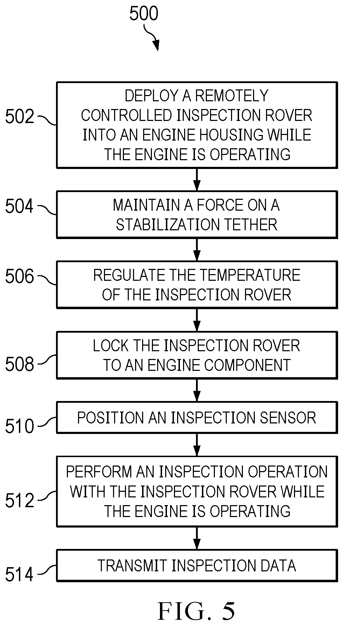

FIGURE 5 illustrates a method 500 of operating an engine inspection apparatus according to embodiments of the present disclosure. An embodiment of the method illustrated in FIGURE 5 is for illustration only. One or more of the components illustrated in FIGURE 5 may be implemented in specialized circuitry configured to perform the noted functions or one or more of the components may be implemented by one or more processors executing instructions to perform the noted functions. Other embodiments of a method 500 of operating an engine inspection apparatus could be used without departing from the scope of this disclosure.

As illustrated in FIGURE 5, the method 500 begins at step 502. At step 502, a remotely controlled inspection rover, such as inspection rover 110 of FIGURE 1, is deployed into an engine housing while the engine is operating. For example, the inspection rover may be deployed from a rover deployment cart such as rover deployment cart 130 of FIGURE 1. At step 504, a force is maintained on a stabilization tether, such as stabilization tether 150 of FIGURE 1, while the inspection rover is deployed in the engine housing. The stabilization tether may be disposed between the inspection rover and the rover deployment cart. At step 506, the temperature of the inspection rover is regulated. For example, the stabilization tether may transport a cooling medium to and from the inspection rover. At step 508, the inspection rover is locked to an engine component. For example, a stabilization locking mechanism disposed on the inspection rover may be locked to a component of the engine. At step 510, an inspection sensor, such as inspection sensor 116 of FIGURE 2 is positioned. For example, the inspection sensor may be positioned by a positioning arm, such as positioning arm 120 of FIGURE 2, or the inspection rover may position itself with a locomotion system to position the inspection sensor. At step 512, an inspection operation is performed with the inspection rover while the engine is running. For example, the inspection rover may inspect a component of the engine, such as a plurality of fan blades, while the component is in motion. The inspection may be one of high-speed photography, an acoustical analysis (e.g., a ping test), a LIDAR analysis, etc. Finally, at step 514, the inspection rover transmits inspection data related to the inspection operation. For example, the inspection data may be transmitted via the stabilization tether, a wireless transmission system such as WiFi or Bluetooth, etc.

Although FIGURE 5 illustrates one example of a method 500 of operating an engine inspection apparatus, various changes may be made to FIGURE 5. For example, while shown as a series of steps, various steps in FIGURE 5 could overlap, occur in parallel, occur in a different order, or occur any number of times.

In some embodiments, various functions described in this patent document are implemented or supported by a computer program that is formed from computer readable program code and that is embodied in a computer readable medium. The phrase "computer readable program code" includes any type of computer code, including source code, object code, and executable code. The phrase "computer readable medium" includes any type of medium capable of being accessed by a computer, such as read only memory (ROM), random access memory (RAM), a hard disk drive, a compact disc (CD), a digital video disc (DVD), or any other type of memory. A "non-transitory" computer readable medium excludes wired, wireless, optical, or other communication links that transport transitory electrical or other signals. A non-transitory computer readable medium includes media where data can be permanently stored and media where data can be stored and later overwritten, such as a rewritable optical disc or an erasable storage device.

It may be advantageous to set forth definitions of certain words and phrases used throughout this patent document. The terms "application" and "program" refer to one or more computer programs, software components, sets of instructions, procedures, functions, objects, classes, instances, related data, or a portion thereof adapted for implementation in a suitable computer code (including source code, object code, or executable code). The term "communicate," as well as derivatives thereof, encompasses both direct and indirect communication. The terms "include" and "comprise," as well as derivatives thereof, mean inclusion without limitation. The term "or" is inclusive, meaning and/or. The phrase "associated with," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, have a relationship to or with, or the like. The phrase "at least one of," when used with a list of items, means that different combinations of one or more of the listed items may be used, and only one item in the list may be needed. For example, "at least one of: A, B, and C" includes any of the following combinations: A, B, C, A and B, A and C, B and C, and A and B and C.

The description in the present disclosure should not be read as implying that any particular element, step, or function is an essential or critical element that must be included in the claim scope. The scope of patented subject matter is defined only by the allowed claims. Moreover, none of the claims invokes 35 U.S.C. § 112(f) with respect to any of the appended claims or claim elements unless the exact words "means for" or "step for" are explicitly used in the particular claim, followed by a participle phrase identifying a function. Use of terms such as (but not limited to) "mechanism," "module," "device," "unit," "component," "element," "member," "apparatus," "machine," "system," "processor," or "controller" within a claim is understood and intended to refer to structures known to those skilled in the relevant art, as further modified or enhanced by the features of the claims themselves, and is not intended to invoke 35 U.S.C. § 112(f).

While this disclosure has described certain embodiments and generally associated methods, alterations and permutations of these embodiments and methods will be apparent to those skilled in the art. Accordingly, the above description of example embodiments does not define or constrain this disclosure. Other changes, substitutions, and alterations are also possible without departing from the spirit and scope of this disclosure, as defined by the following claims.

## Claims

1. An engine inspection apparatus comprising:
a remotely controlled inspection rover (110);
a rover deployment cart (130); and
a stabilization tether (150) having a first end attached to the inspection rover (110) and a second end attached to the rover deployment cart (130).

2. The engine inspection apparatus of claim 1, wherein the stabilization tether (150) is configured to prevent:
ingestion of the inspection rover (110) by an engine (402) while the engine (402) is operating; and/or
expulsion of the inspection rover (110) by the engine (402) while the engine (402) is operating.

3. The engine inspection apparatus of claim 1 or 2, wherein the stabilization tether (150) comprises at least one of:
a power link (150a-150f) configured to provide power to the inspection rover (110);
a data reception link (150a-150f) configured to receive control commands for operating the inspection rover (110);
a data transmission link (150a-150f) configured to transmit inspection data from the inspection rover (110);
a coolant send line (150a-150f) configured to provide a cooling medium to the inspection rover (110);
a coolant return line (150a-150f) configured to receive a cooling medium from the inspection rover (110); and
a purge supply line (150a-150f) configured to introduce a purging medium into an engine (402).

4. The engine inspection apparatus of any preceding claim, wherein the inspection rover (110) comprises:
a frame (112);
a locomotion system (114) disposed on the frame (112);
a stabilization locking mechanism configured to lock the frame (112) on to a component of an engine (402); and
at least one inspection sensor (116) extending from the frame (112).

5. The engine inspection apparatus of claim 4, wherein the at least one inspection sensor (116) is at least one of:
a high-speed camera;
an acoustical sensor; and
a LIDAR.

6. The engine inspection apparatus of claim 4 or 5, further comprising an inspection sensor positioning arm (120) disposed between the at least one inspection sensor (116) and the frame (112), configured to position the at least one inspection sensor (116) for performing an inspection operation.

7. The engine inspection apparatus of any preceding claim, wherein the rover deployment cart (130) comprises:
a base (132);
a locomotion system (114) disposed on the base (132); and
a rover deployment platform (136) extending from the base (132), wherein the rover deployment platform (136) is configured to deploy the inspection rover (110) into an engine housing while the engine (402) is operating.

8. A remotely controlled inspection rover comprising:
a frame (112);
a locomotion system (114) disposed on the frame (112);
a high-speed camera extending from the frame (112); and
a stabilization tether (150) having a first end attached to the inspection rover (110) and a second end configured to be attached to a support apparatus, optionally wherein:
the support apparatus is a rover deployment cart (130) configured to deploy the inspection rover (110) into an engine housing while the engine (402) is operating; and/or
the remotely controlled inspector rover (110) further comprises a stabilization locking mechanism configured to lock the frame (112) on to a component of an engine (402), and an inspection sensor positioning arm (120) arranged between the high-speed camera and the frame (112) configured to position the high-speed camera while performing an inspection operation.

9. A method of operating an engine inspection apparatus comprising:
deploying a remotely controlled inspection rover (110) from a rover deployment cart (130) into an engine housing, while the engine (402) is operating;
maintaining force on a stabilization tether (150) disposed between the inspection rover (110) and the rover deployment cart (130) while the inspection rover (110) is deployed in the engine housing; and
performing an inspection operation with the inspection rover (110) on a component of the engine (402), via an inspection sensor (116), while the engine (402) is operating.

10. The method of claim 9, wherein inspecting the component of the engine (402) comprises at least one of:
performing high speed photography of the component while the component is in motion;
performing an acoustical analysis of the component while the component is in motion; and
performing a LIDAR analysis of the component while the component is in motion.

11. The method of claim 9 or 10, wherein the component comprises a plurality of fan blades.

12. The method of any of claims 9 to 11, wherein the inspection rover (110) is deployed into an inlet (304) of the engine housing, and maintaining force on the stabilization tether (150) prevents the engine (402) from ingesting the inspection rover (110).

13. The method of any of claims 9 to 12, wherein:
the inspection rover (110) is deployed into an exhaust of the engine housing, and maintaining force on the stabilization tether (150) prevents the engine (402) from expelling the inspection rover (110); and/or
the inspection rover (110) is remotely controlled by receiving operation commands via the stabilization tether (150).

14. The method of any of claims 9 to 13, further comprising:
regulating a temperature of the inspection rover (110) via a cooling medium transported by the stabilization tether (150); and/or
locking the inspection rover (110) to a component comprised by the engine (402) prior to performing the inspection operation.

15. The method of any of claims 9 to 14, further comprising:
positioning the inspection sensor (116) via an inspection sensor positioning arm (120) prior to performing the inspection operation; and/or
transmitting inspection data related to the inspection operation from the inspection rover (110), wherein the inspection data is transmitted via the stabilization tether (150).
